# EUROPEAN PATENT APPLICATION

(11) **EP 2 981 153 A1**
(43) Date of publication of application: **03.02.2016**
(21) Application number: 14775661.3
(22) Date of filing: 26.03.2014
(51) Int. Cl.: H04W 92/18, H04W 16/32, H04W 72/04

(54) **MOBILE COMMUNICATION SYSTEM, BASE STATION, AND USER TERMINAL**

(30) Priority: 27.03.2013 US 201361805777 P
(71) Applicant: Kyocera Corporation, Kyoto-shi, Kyoto 612-8501 (JP)
(72) Inventor: FUKUTA, Noriyoshi, Kyoto-shi Kyoto 612-8501 (JP); KALHAN, Amit, San Diego, California 92123 (US)
(74) Representative: Schwabe - Sandmair - Marx
(86) International application number: PCT/JP2014/058648
(87) International publication number: WO 2014/157395

(57) **Abstract**

A mobile communication system according to the present invention supports a D2D communication that is a direct terminal-to-terminal communication. The system comprises: a base station configured to perform a predetermined radio communication by using a specific frequency band; and a user terminal configured to exist in a cell of the base station. The base station permits the user terminal to perform the D2D communication in which the specific frequency band is used, in a time period during which the predetermined radio communication is stopped.

## Description

### TECHNICAL FIELD

The present invention relates to a mobile communication system that supports D2D communication.

### BACKGROUND ART

In 3GPP (3rd Generation Partnership Project) which is a project aiming to standardize a mobile communication system, the introduction of a terminal-to-terminal (Device to Device: D2D) communication is discussed as a new function from Release 12 (see Non Patent Document 1).

In the D2D communication, a plurality of neighboring user terminals perform direct communication without passing through a core network. That is, a data path of the D2D communication does not pass through the core network. On the other hand, a data path of normal communication (cellular communication) of the mobile communication system passes through the core network.

### PRIOR ART DOCUMENT

### Non-PATENT DOCUMENT

[Non Patent Literature 1] 3GPP technical report "TR 22.803 V1.1.0" November 2012

### SUMMARY OF THE INVENTION

In order to prevent the interference between D2D communication and cellular communication, it is considered ensuring a dedicated frequency band for D2D communication.

However, when a dedicated frequency band is ensured for D2D communication, there may be a relative reduction in the frequency band that can be used in cellular communication, thus possibly resulting in a decline in the frequency usage efficiency in the mobile communication system.

Therefore, the present invention provides a mobile communication system, a base station, and a user terminal with which it is possible to restrain a decline in the frequency usage efficiency even when D2D communication is introduced.

A mobile communication system according to a first aspect supports a D2D communication that is a direct terminal-to-terminal communication. The mobile communication system comprises: a base station configured to perform a predetermined radio communication by using a specific frequency band; and a user terminal configured to exist in a cell of the base station. The base station permits the user terminal to perform the D2D communication in which the specific frequency band is used, in a time period during which the predetermined radio communication is stopped.

A base station according to a second aspect manages a cell in a mobile communication system that supports a D2D communication that is a terminal-to-terminal communication. The base station comprises: a communication unit configured to perform a predetermined radio communication by using a specific frequency band; and a control unit configured to permit a user terminal existing in the cell to perform the D2D communication in which the specific frequency band is used, in a time period during which the predetermined radio communication is stopped.

A user terminal according to a third aspect is used in a mobile communication system that supports a D2D communication that is a terminal-to-terminal communication. The user terminal comprises: a reception unit configured to receive control information for permitting the D2D communication in which a specific frequency band is used, from a base station configured to perform a predetermined radio communication by using the specific frequency band; and a control unit configured to perform the D2D communication by using the specific frequency band in a period during which the base station stops the predetermined radio communication, on the basis of the control information.

### BRIEF DESCRIPTION OF THE DRAWINGS

[Fig. 1] Fig. 1 is a configuration diagram of an LTE system according to an embodiment.
[Fig. 2] Fig. 2 is a block diagram of UE according to the embodiment.
[Fig. 3] Fig. 3 is a block diagram of eNB according to the embodiment.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 is a diagram for describing D2D communication in a direct communication mode.
[Fig. 7] Fig. 7 is a diagram illustrating an operation environment according to the embodiment.
[Fig. 8] Fig. 8 is a diagram for describing an operation according to the embodiment (part 1).
[Fig. 9] Fig. 9 is a diagram for describing an operation according to the embodiment (part 2).
[Fig. 10] Fig. 10 is a diagram for describing an operation according to the embodiment (part 3).
[Fig. 11] Fig. 11 is a sequence diagram showing an operation according to the embodiment.
[Fig. 12] Fig. 12 is a timing chart illustrating an operation according to the embodiment.

### DESCRIPTION OF THE EMBODIMENT

### [Overview of Embodiments]

A mobile communication system according to the embodiments supports a D2D communication that is a direct terminal-to-terminal communication. The mobile communication system comprises: a base station configured to perform a predetermined radio communication by using a specific frequency band; and a user terminal configured to exist in a cell of the base station. The base station permits the user terminal to perform the D2D communication in which the specific frequency band is used, in a time period during which the predetermined radio communication is stopped.

In the embodiments, the specific frequency band is a frequency for a backhaul communication. The predetermined radio communication is the backhaul communication with a neighbor base station or an upper device. The base station permits the user terminal to perform the D2D communication in which the specific frequency band is used, in a time period during which the backhaul communication with the neighboring base station or the upper device is stopped.

In the embodiments, the base station transmits control information for permitting the D2D communication in which the specific frequency band is used, to the user terminal. The control information includes at least one of: time information on a period during which the D2D communication in which the specific frequency band is used is permitted; frequency information indicating the specific frequency band; and permission information indicating that the D2D communication is permitted.

In the embodiments, the base station transmits, in a broadcast manner, the control information to the user terminal.

In the embodiments, the user terminal transmits information indicating whether the user terminal supports the D2D communication, to the base station. The base station transmits, in a unicast manner, the control information to the user terminal that supports the D2D communication.

In other embodiments, the specific frequency band is a frequency for MBMS transmission. The predetermined radio communication is the MBMS transmission. The base station permits the user terminal to perform the D2D communication in which the specific frequency band is used, in a time period during which the MBMS transmission is stopped.

A base station according to embodiments manages a cell in a mobile communication system that supports a D2D communication that is a terminal-to-terminal communication. The base station comprises: a communication unit configured to perform a predetermined radio communication with a neighboring base station or an upper device by using a specific frequency band; and a control unit configured to permit a user terminal existing in the cell of the base station to perform the D2D communication in which the specific frequency band is used, in a time period during which the predetermined radio communication is stopped.

A user terminal according to embodiments is used in a mobile communication system that supports a D2D communication that is a terminal-to-terminal communication. The user terminal comprises: a reception unit configured to receive control information for permitting the D2D communication in which a specific frequency band is used, from a base station configured to perform a predetermined radio communication by using the specific frequency band; and a control unit configured to perform the D2D communication by using the specific frequency band in a period during which the base station stops the predetermined radio communication, on the basis of the control information.

### [Embodiment]

Hereinafter, with reference to the accompanying drawings, description will be provided for an embodiment in a case where D2D communication is introduced in an LTE (Long Term Evolution) system which is one of the mobile communication systems configured to comply with the 3GPP standards.

### (LTE system)

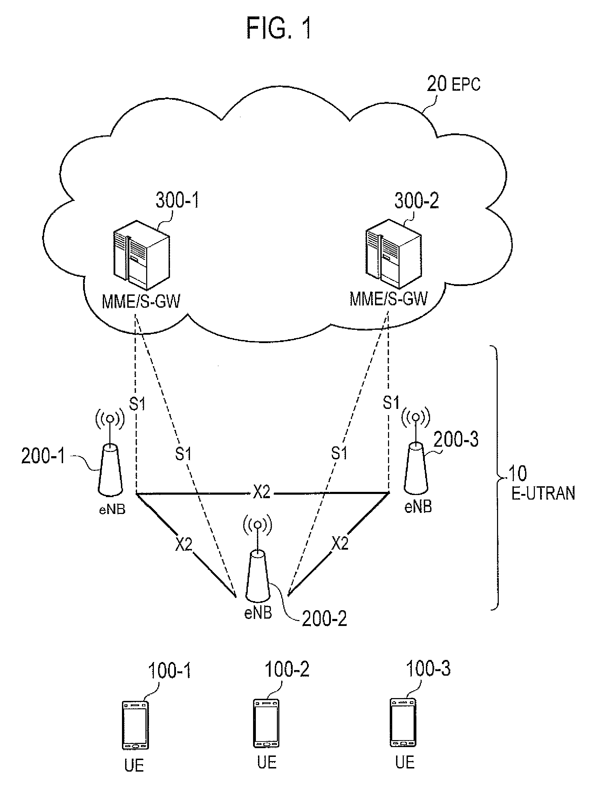

Fig. 1 is a configuration diagram of an LTE system according to the present embodiment. As shown in Fig. 1, the LTE system includes a plurality of UEs (User Equipments) 100, E-UTRAN (Evolved-UMTS Terrestrial Radio Access Network) 10, and EPC (Evolved Packet Core) 20. The E-UTRAN 10 corresponds to a radio access network and the EPC 20 corresponds to a core network. The E-UTRAN 10 and the EPC 20 configure a network of the LTE system.

The UE 100 is a mobile communication device and performs radio communication with a cell (a serving cell) with which a connection is established. The UE 100 corresponds to a user terminal.

The E-UTRAN 10 includes a plurality of eNBs 200 (evolved Node-Bs). The eNB 200 corresponds to a base station. The eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100.

The eNB 200, for example, has a radio resource management (RRM) function, a function of routing user data, and a measurement control function for mobility control and scheduling.

The EPC 20 includes a plurality of MME (Mobility Management Entity)/S-GWs (Serving-Gateways) 300. The MME is a network node for performing various mobility controls and the like for the UE 100 and corresponds to a controller. The S-GW is a network node that performs control to transfer user data and corresponds to a mobile switching center. The EPC 20 including the MME/S-GW 300 accommodates the eNB 200.

The eNBs 200 are connected mutually via an X2 interface. Further, the eNB 200 is connected to the MME/S-GW 300 via an S1 interface.

Next, the configurations of the UE 100 and the eNB 200 will be described.

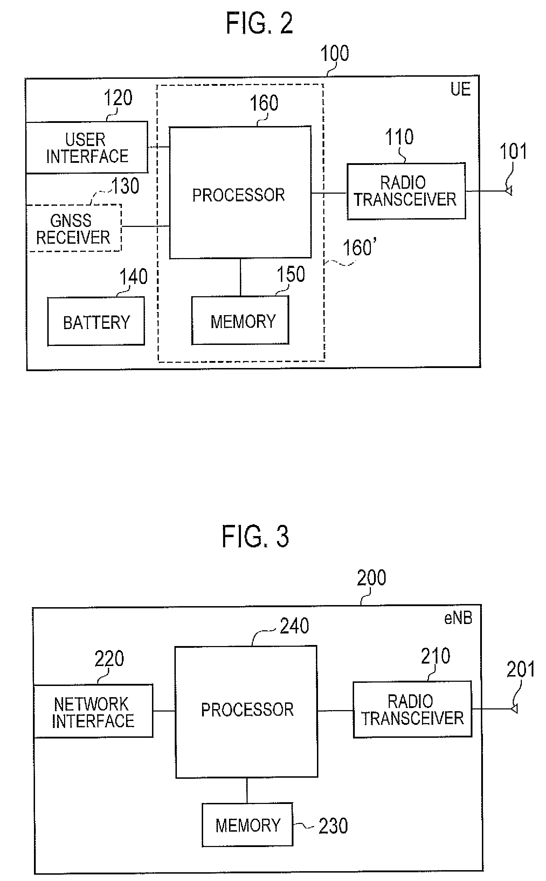

Fig. 2 is a block diagram of the UE 100. As shown in Fig. 2, the UE 100 includes an antenna 101, a radio transceiver 110, a user interface 120, a GNSS (Global Navigation Satellite System) receiver 130, a battery 140, a memory 150, and a processor 160. The memory 150 and the processor 160 configure a control unit. The UE 100 may not necessarily include the GNSS receiver 130. Further, the memory 150 may be integrally formed with the processor 160, and this set (that is, a chip set) may be called a processor 160'.

The antenna 101 and the radio transceiver 110 are used to transmit and receive a radio signal. The radio transceiver 110 converts a baseband signal output from the processor 160 into the radio signal, and transmits the radio signal from the antenna 101. Further, the radio transceiver 110 converts the radio signal received by the antenna 101 into the baseband signal, and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 includes an antenna 201, a radio transceiver 210, a network interface 220, a memory 230, and a processor 240. The memory 230 and the processor 240 configure a control unit. Further, the memory 230 may be integrally formed with the processor 240.

The antenna 201 and the radio transceiver 210 are used to transmit and receive a radio signal to and from the UE 100. The radio transceiver 210 converts the baseband signal output from the processor 240 into the radio signal, and transmits the radio signal from the antenna 201. Further, the radio transceiver 210 converts the radio signal received by the antenna 201 into the baseband signal, and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

In the present embodiment, the X2 interface is configured as a radio backhaul line. That is, the network interface 220 corresponds to a communication unit that performs radio communication (namely, backhaul communication) with the neighboring eNB 200. It is noted that the network interface 220 may be integrally formed with the radio transceiver 210.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

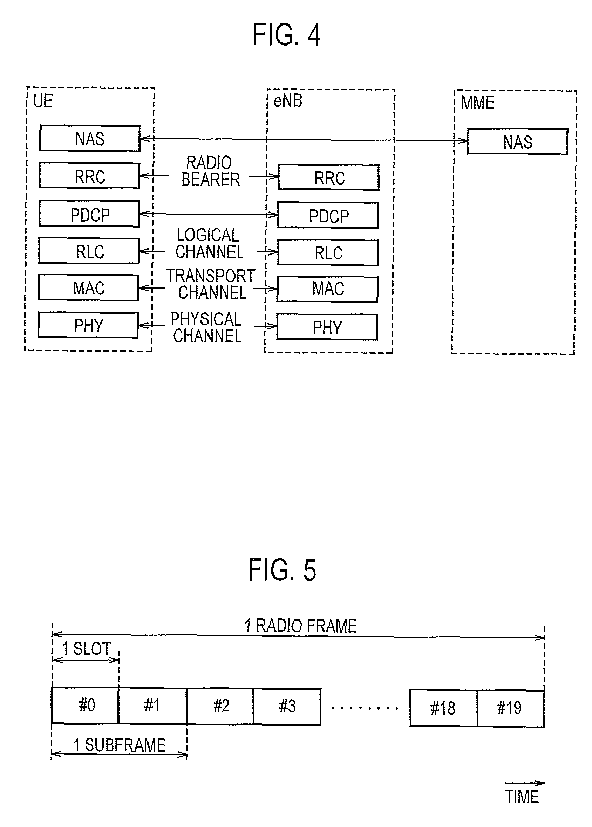

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data is transmitted via the physical channel.

The MAC layer performs priority control of data, and a retransmission process and the like by hybrid ARQ (HARQ). Between the MAC layer of the UE 100 and the MAC layer of the eNB 200, data is transmitted via a transport channel. The MAC layer of the eNB 200 includes a transport format of an uplink and a downlink (a transport block size and a modulation and coding scheme (MCS)) and a scheduler for deciding a resource block to be assigned.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control message (an RRC message) for various types of setting is transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (an RRC connected state), and when there is no RRC connection, the UE 100 is in an idle state (an RRC idle state).

A NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As shown in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. The resource block includes a plurality of subcarriers in the frequency direction. Among radio resources assigned to the UE 100, a frequency resource can be specified by a resource block and a time resource can be specified by a subframe (or slot).

In the downlink, an interval of several symbols at the head of each subframe is a control region used as a physical downlink control channel (PDCCH) for mainly transmitting a control signal. Further, the other interval of each subframe is a region available as a physical downlink shared channel (PDSCH) for mainly transmitting user data.

In the uplink, both ends in the frequency direction of each subframe are control regions used as a physical uplink control channel (PUCCH) for mainly transmitting a control signal. Further, the central portion in the frequency direction of each subframe is a region mainly capable of being used as a physical uplink shared channel (PUSCH) for transmitting user data.

### (D2D communication)

The LTE system according to the present embodiment supports D2D communication that is direct UE-to-UE communication. Hereinafter, the D2D communication will be described in comparison with normal communication (cellular communication) of the LTE system.

In the cellular communication, a data path passes through the EPC 20 that is the core network. The data path indicates a communication path of user data (a user plane). On the other hand, in the D2D communication, the data path set between the UEs does not pass through the EPC 20. Thus, it is possible to reduce a traffic load of the EPC 20.

The UE 100 discovers another UE 100 existing in the vicinity of the UE 100 by a neighboring UE discovery process (Discovery), and starts the D2D communication under the management of the eNB 200. The D2D communication includes a direct communication mode and a locally routed mode.

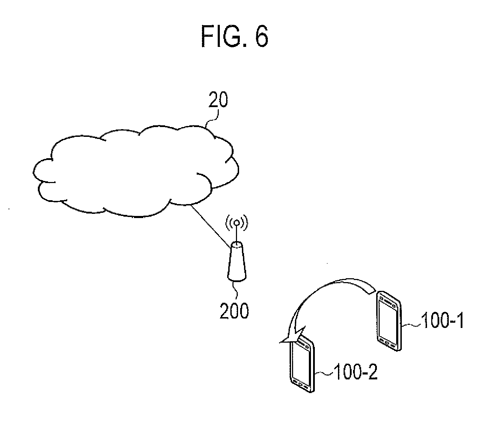

Fig. 6 is a diagram for describing the direct communication mode. As shown in Fig. 6, in the direct communication mode, a data path does not pass through the eNB 200. A UE group comprising a plurality of UEs 100 adjacent to each other directly perform radio communication with a low transmission power, in a cell of the eNB 200. Thus, a merit including reduction of power consumption of the UE 100 and decrease of interference to a neighboring cell can be obtained.

On the other hand, in the locally routed mode, a data path passes through the eNB 200, however, does not pass through the EPC 20. The locally routed mode is able to reduce traffic load of the EPC 20, however, has small merit as compared with the direct communication mode. Thus, in the present embodiment, D2D communication in the direct communication mode will be mainly considered. However, D2D communication in the locally routed mode may be employed.

### (Operation according to embodiment)

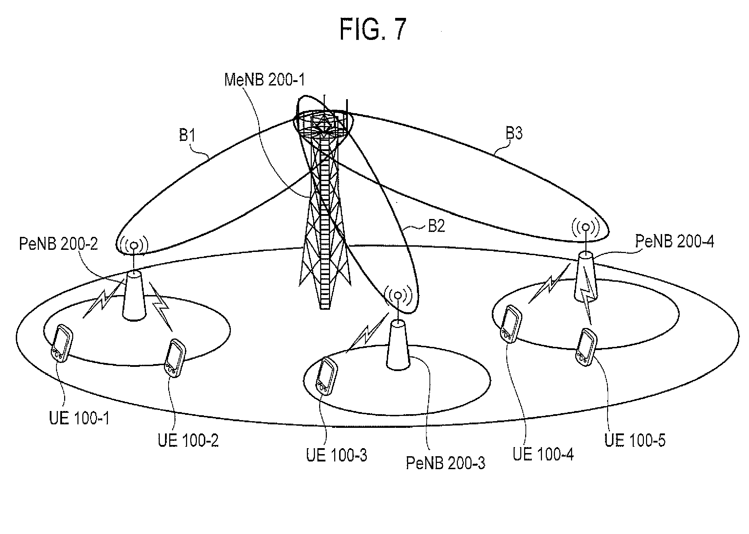

Next, an operation according to the present embodiment will be described. Fig. 7 is a diagram illustrating an operation environment according to the present embodiment.

As shown in Fig. 7, MeNB 200-1 and PeNB 200-2 through 200-4 are provided in the operation environment according to the present embodiment. The MeNB 200-1 is eNB with a high transmission power, and forms a large cell (macro cell). In contrast, each of the PeNB 200-2 through 200-4 is eNB with a low transmission power, and forms a small cell (pico cell). Each of the PeNB 200-2 through 200-4 is provided within the cell coverage of the MeNB 200-1. Such a heterogeneous network enables the distribution of the load of the MeNB 200-1 to the PeNB 200-2 through 200-4.

UE 100-1 and UE 100-2 exist in the cell of the PeNB 200-2. That is, the cell of the PeNB 200-2 is a serving cell of each of the UE 100-1 and the UE 100-2. Further, UE 100-3 exists in the cell of the PeNB 200-3. That is, the cell of the PeNB 200-3 is a serving cell of the UE 100-3. In addition, UE 100-4 and UE 100-5 exist in the cell of the PeNB 200-4. That is, the cell of the PeNB 200-4 is a serving cell of each of the UE 100-4 and the UE 100-5. It is noted that each of the UE 100-1 through 100-5 may either be in an idle state or in a connected state.

Because the PeNB 200-2 is provided within the cell coverage of the MeNB 200-1, the MeNB 200-1 corresponds to the neighboring eNB of the PeNB 200-2. Similarly, because each of the PeNB 200-3 and 200-4 is provided within the cell coverage of the MeNB 200-1, the MeNB 200-1 corresponds to the neighboring eNB of each of the PeNB 200-3 and 200-4.

Each of the PeNB 200-2 through 200-4 performs eNB-to-eNB radio communication with the MeNB 200-1.

The MeNB 200-1 and the PeNB 200-2 perform radio communication with directivity directed toward each other. Hereinafter, the state when the MeNB 200-1 and the PeNB 200-2 perform radio communication with directivity directed toward each other is a state when a radio backhaul line B1 is established between the MeNB 200-1 and the PeNB 200-2.

Further, the MeNB 200-1 and the PeNB 200-3 perform radio communication with directivity directed toward each other. Hereinafter, the state when the MeNB 200-1 and the PeNB 200-3 perform radio communication with directivity directed toward each other is a state when a radio backhaul line B2 is established between the MeNB 200-1 and the PeNB 200-3.

In addition, the MeNB 200-1 and the PeNB 200-4 perform radio communication with directivity directed toward each other. Hereinafter, the state when the MeNB 200-1 and the PeNB 200-4 perform radio communication with directivity directed toward each other is a state when a radio backhaul line B3 is established between the MeNB 200-1 and the PeNB 200-4.

A frequency band (hereinafter, called a "specific frequency band") for eNB-to-eNB communication is assigned to the eNB-to-eNB communication. In the present embodiment, in order to avoid the interference in the backhaul lines B1 through B3, the backhaul lines B1 through B3 are established based on time division. That is, during the time period that one of the PeNB 200 of the PeNB 200-2 through 200-4 performs radio communication with the MeNB 200-1, the remaining PeNB 200s stop the radio communication with the MeNB 200-1. The PeNB 200 that performs radio communication with the MeNB 200-1 switches sequentially.

In the time period during which the radio communication with the MeNB 200-1 is stopped, each of the PeNB 200-2 through 200-4 permit the UE 100 to perform D2D communication in which the specific frequency band is used. Thus, it is possible to divert the specific frequency band to the D2D communication, and thus, it is possible to restrain a decline in the frequency usage efficiency of the LTE system.

In the present embodiment, each of the PeNB 200-2 through 200-4 transmits the D2D control information for permitting D2D communication in which the specific frequency band is used, to the subordinate UE 100 (the UE 100 that exists in its own cell). The D2D control information includes at least one of: the time information on a time period during which the D2D communication in which the specific frequency band is used is permitted (hereinafter, called "D2D permitted period"); the frequency information indicating the specific frequency band; and the permission information indicating that the D2D communication is permitted. Each of the PeNB 200-2 through 200-4 may transmit the D2D control information either in a broadcast manner or in a unicast manner.

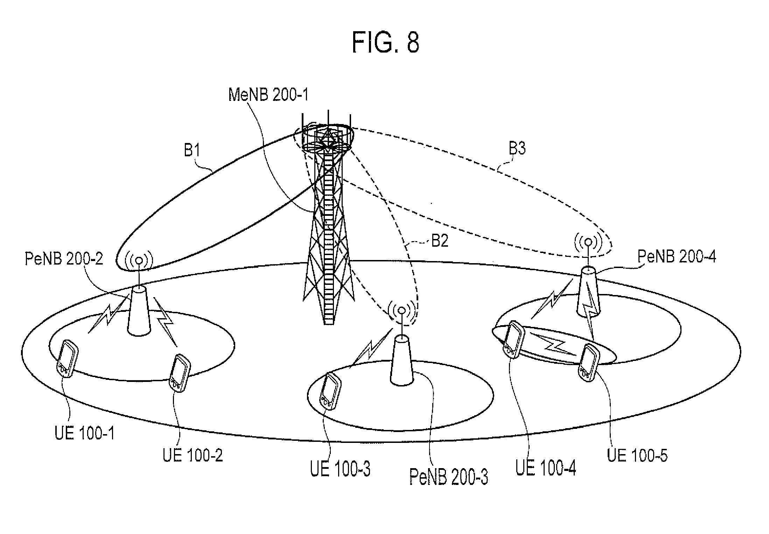

Fig. 8 through Fig. 10 are diagrams for describing an operation according to the present embodiment.

As shown in Fig. 8, during a first time period, the radio backhaul line B1 is established between the MeNB 200-1 and the PeNB 200-2, and the MeNB 200-1 and the PeNB 200-2 perform eNB-to-eNB communication via the radio backhaul line B1.

On the other hand, during the first time period, the radio backhaul lines B2 and B3 are not established. The PeNB 200-4 permits the UE 100-4 and 100-5 to perform the D2D communication in which the specific frequency band is used. The UE 100-4 and 100-5 perform the D2D communication by using the specific frequency band.

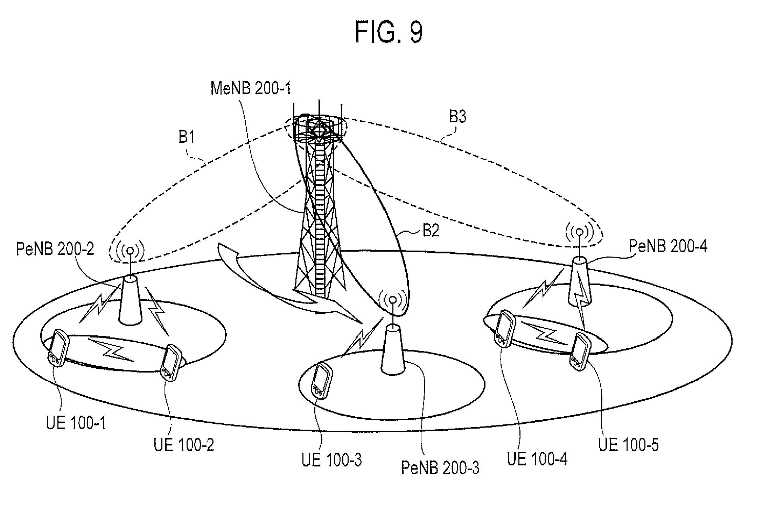

As shown in Fig. 9, during a second time period, the radio backhaul line B2 is established between the MeNB 200-1 and the PeNB 200-3, and the MeNB 200-1 and the PeNB 200-3 perform eNB-to-eNB communication via the radio backhaul line B2.

On the other hand, during the second time period, the radio backhaul lines B1 and B3 are not established. The PeNB 200-2 permits the UE 100-1 and 100-2 to perform the D2D communication in which the specific frequency band. The UE 100-1 and 100-2 perform the D2D communication by using the specific frequency band. Further, the PeNB 200-4 permits the UE 100-4 and 100-5 to perform the D2D communication in which the specific frequency band is used. The UE 100-4 and 100-5 perform the D2D communication using by the specific frequency band.

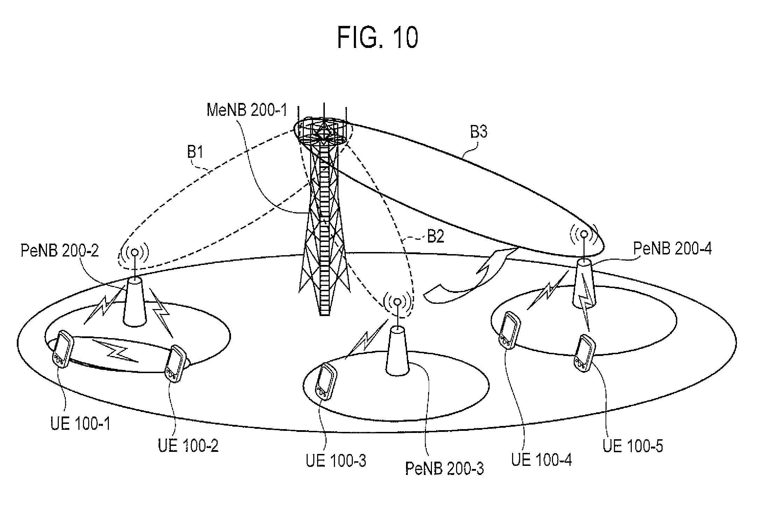

As shown in Fig. 10, during a third time period, the radio backhaul line B3 is established between the MeNB 200-1 and the PeNB 200-4, and the MeNB 200-1 and the PeNB 200-4 perform eNB-to-eNB communication via the radio backhaul line B3.

On the other hand, during the third time period, the radio backhaul lines B1 and B2 are not established. The PeNB 200-2 permits the UE 100-1 and 100-2 to the D2D communication in which the specific frequency band is used. The UE 100-1 and 100-2 perform the D2D communication by using the specific frequency band.

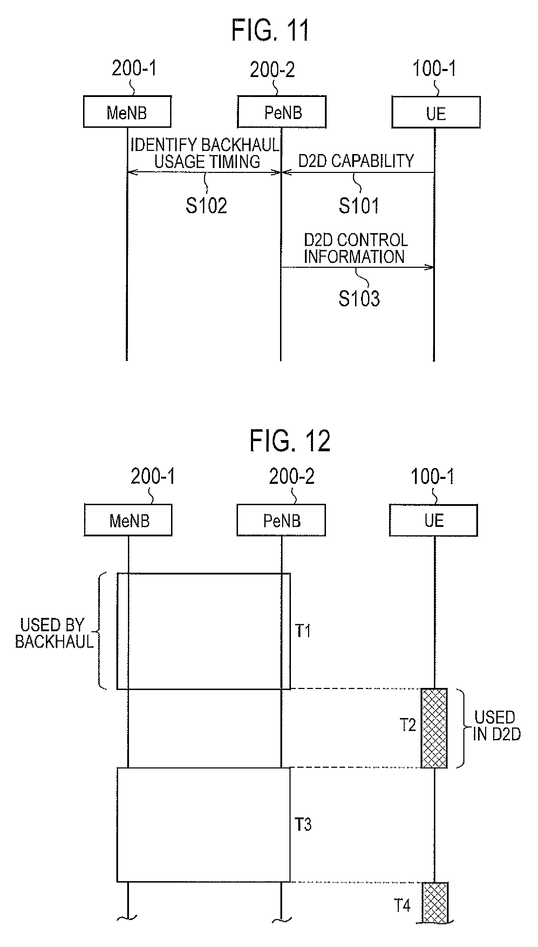

Fig. 11 is a sequence diagram showing an operation according to the present embodiment. The operation sequence related to the PeNB 200-2 is described below.

As shown in Fig. 11, in step S101, the UE 100-1 transmits UE capability information indicating the capability of the UE 100-1 to the PeNB 200-2. The UE capability information includes D2D capability information indicating whether or not the D2D communication is supported. Here, the following description will be provided on the assumption that the UE 100-1 supports the D2D communication.

In step S102, the PeNB 200-2 identifies the time period when the backhaul line B1 is established between the PeNB 200-2 and the MeNB 200-1 (the first time period). The time period of establishing the backhaul line B1 with the MeNB 200-1 may be set beforehand, or may be set through negotiations with the MeNB 200.

For example, the time period of establishing the backhaul line B1 may be specified by the MeNB 200-1, and the notification information indicating the specified time period may be transmitted from the MeNB 200-1 to the PeNB 200-2. Alternatively, the time period of establishing the backhaul line B1 may be specified by the PeNB 200-2, and the request information indicating the specified time period may be transmitted from the PeNB 200-2 to the MeNB 200-1.

Upon identifying the time period (the first time period) of establishing the backhaul line B1 with the MeNB 200-1, the PeNB 200-2 decides the D2D permitted period within the time period (the second time period and the third time period) excluding the first time period.

In step S103, the PeNB 200-2 transmits the D2D control information for permitting the D2D communication in which the specific frequency band is used, to the UE 100-1. The PeNB 200-2 need not necessarily transmit the D2D control information to the UE 100 that does not support the D2D communication.

The PeNB 200-2 may transmit the D2D control information at a point of time before the starting point of the D2D permitted period, or the PeNB 200-2 may transmit the D2D control information periodically from the time the D2D permitted period starts up to the time it ends. In the latter case, the time information on the D2D permitted period need not necessarily be included in the D2D control information.

Further, the PeNB 200-2 may transmit the D2D control information in a specific frequency band, or may transmit the D2D control information in a frequency band other than the specific frequency band. In the former case, the frequency information indicating the specific frequency band need not necessarily be included in the D2D control information.

The UE 100-1 performs the D2D communication using the specific frequency band in the D2D permitted period, based on the D2D control information received from the PeNB 200-2.

Fig. 12 is a timing chart illustrating an operation according to the present embodiment. The operation sequence related to the PeNB 200-2 is described below.

As shown in Fig. 12, in the time period T1, the PeNB 200-2 uses the specific frequency band in the eNB-to-eNB communication. In time period T1, the UE 100-1 does not perform the D2D communication by using the specific frequency band.

In time period T2, the PeNB 200-2 stops the eNB-to-eNB communication that uses the specific frequency band. In time period T2, the UE 100-1 performs the D2D communication by using the specific frequency band.

In time period T3, the PeNB 200-2 uses the specific frequency band in the eNB-to-eNB communication. In time period T3, the UE 100-1 does not perform the D2D communication by using the specific frequency band. Hereafter, the same operations are repeated.

As described above, in the time period during which the radio communication with the MeNB 200-1 is stopped, each of the PeNB 200-2 through 200-4 permits the UE 100 to perform the D2D communication in which the specific frequency band is used. Thus, it is possible to divert the specific frequency band to the D2D communication, and thus, it is possible to restrain a decline in the frequency usage efficiency of the LTE system.

### [Modification of Embodiment]

In the above-described embodiment, in the time period during which the radio communication with the MeNB 200-2 is stopped, each of the PeNB 200-2 through 200-4 that performs radio communication with the MeNB 200-1 using the specific frequency band for eNB-to-eNB communication permits the UE 100 in its own cell to perform the D2D communication in which the specific frequency band is used.

However, each of the PeNB 200-2 through 200-4 may use the specific frequency band in the radio communication performed with an upper device. Here, the "upper device" may be an MME/S-GW 300, or a base station control device (BSC). In this case, in the time period during which the radio communication with the upper device is stopped, each of the PeNB 200-2 through 200-4 may permit the UE 100 in its own cell to perform the D2D communication in which the specific frequency band is used. In a modification of the upper embodiment, the PeNB may be a HeNB (Home eNB), and in such a case, the "upper device" may be a HeNB-GW (HeNB-Gateway).

### [Other Embodiments]

In the above embodiment, no particular description is provided regarding the carrier structure of the specific frequency band in the eNB-to-eNB communication, however, the carrier structure described below is possible. Specifically, in the eNB-to-eNB communication, the transmission and receipt of the control information, such as the mobility control information and the multiplexing access control information can be made superfluous. Thus, the specific frequency band may be a carrier structure in which a control channel is not provided. Further, because of the fact that the eNB-to-eNB communication can be performed in a satisfactory communication state (such as within the expected range), a high level modulation and a low coding rate can be applied.

Moreover, the aforementioned embodiments have described an example in which the present invention is applied to a heterogeneous network. However, the present invention is not limited to a heterogeneous network, and may be applied to a network configured only by MeNB, for example.

Moreover, in the aforementioned embodiments, the specific frequency band is a frequency for the backhaul communication, and the eNB 200 permits the D2D communication in which the specific frequency band is used, in the time period during which the backhaul communication is stopped

However, the specific frequency band may be a frequency for MBMS (Multimedia Broadcast Multicast Service) transmission. The eNB 200 may permit the D2D communication in which the specific frequency band is used, in a time period during which the MBMS transmission is stopped. In this case, the D2D control information according to the aforementioned embodiments is applied by replacing the eNB to eNB communication (the backhaul communication) with the MBMS transmission. It is noted that the MBMS is a service in which the eNB 200 transmits MBMS (MBMS data) in a broadcast manner or a unicast manner. For example, in a case where a dedicated frequency (carrier) for the MBMS transmission is introduced, the D2D communication can be performed in the frequency in a time period during which the MBMS is not transmitted, and then it is possible to effectively utilize the frequency.

Alternatively, the specific frequency band may be an available frequency band without license (what is called unlicensed band). The eNB 200 permits radio communication (downlink communication and/or uplink communication) with the UE 100 by the unlicensed band. The eNB 200 permits the D2D communication in which the specific frequency band is used, in a time period during which the radio communication by the specific frequency band is stopped. It is noted that "white space" can be given as one type of such the specific frequency band. While the white space is assigned for users (referred to as "primary users of the frequency") having one purpose such as a digital television broadcasting, the white space is also an available frequency by users (referred to as "secondary users of the frequency") having another purpose depending on geographical conditions and technical condition. For example, the eNB 200 stops radio communication (of the secondary use) by using the specific frequency band when detecting a start of communication of a primary user during performing the radio communication (of the secondary use) by using the specific frequency band.

In addition, the aforementioned embodiments have described an example in which the present invention is applied to the LTE system. However, the present invention is not limited to the LTE system and may also be applied to systems other than the LTE system.

In addition, the entire content of US Provisional Application No. 61/805777 (filed on March 27, 2013) is incorporated in the present specification by reference.

### INDUSTRIAL APPLICABILITY

The present invention is useful in a mobile communication filed.

## Claims

1. A mobile communication system that supports a D2D communication that is a direct terminal-to-terminal communication, comprising:
a base station configured to perform a predetermined radio communication by using a specific frequency band; and
a user terminal configured to exist in a cell of the base station, wherein
the base station permits the user terminal to perform the D2D communication in which the specific frequency band is used, in a time period during which the predetermined radio communication is stopped.

2. The mobile communication system according to claim 1, wherein
the specific frequency band is a frequency for a backhaul communication,
the predetermined radio communication is the backhaul communication with a neighbor base station or an upper device, and
the base station permits the user terminal to perform the D2D communication in which the specific frequency band is used, in a time period during which the backhaul communication with the neighboring base station or the upper device is stopped.

3. The mobile communication system according to claim 2, wherein
the base station transmits control information for permitting the D2D communication in which the specific frequency band is used, to the user terminal, and
the control information includes at least one of: time information on a period during which the D2D communication in which the specific frequency band is used is permitted; frequency information indicating the specific frequency band; and permission information indicating that the D2D communication is permitted.

4. The mobile communication system according to claim 3, wherein
the base station transmits, in a broadcast manner, the control information to the user terminal.

5. The mobile communication system according to claim 3, wherein
the user terminal transmits information indicating whether the user terminal supports the D2D communication, to the base station, and
the base station transmits, in a unicast manner, the control information to the user terminal that supports the D2D communication.

6. The mobile communication system according to claim 1, wherein
the specific frequency band is a frequency for MBMS transmission,
the predetermined radio communication is the MBMS transmission, and
the base station permits the user terminal to perform the D2D communication in which the specific frequency band is used, in a time period during which the MBMS transmission is stopped.

7. A base station managing a cell in a mobile communication system that supports a D2D communication that is a terminal-to-terminal communication, comprising:
a communication unit configured to perform a predetermined radio communication by using a specific frequency band; and
a control unit configured to permit a user terminal existing in the cell to perform the D2D communication in which the specific frequency band is used, in a time period during which the predetermined radio communication is stopped.

8. A user terminal used in a mobile communication system that supports a D2D communication that is a terminal-to-terminal communication, comprising:
a reception unit configured to receive control information for permitting the D2D communication in which a specific frequency band is used, from a base station configured to perform a predetermined radio communication by using the specific frequency band; and
a control unit configured to perform the D2D communication by using the specific frequency band in a period during which the base station stops the predetermined radio communication, on the basis of the control information.
